(19) Europäisches Patentamt
European Patent Office
Office européen des brevets

(11) **EP 3 079 806 B1**

(12) **FASCICULE DE BREVET EUROPEEN**

(45) Date de publication et mention
de la délivrance du brevet:
**20.04.2022 Bulletin 2022/16**

(21) Numéro de dépôt: **14851415.1**

(22) Date de dépôt: **09.12.2014**

(51) Classification Internationale des Brevets (IPC):
**B01J 20/04** *(2006.01)* **B01J 20/28** *(2006.01)*
**B01J 20/30** *(2006.01)* **B01D 53/50** *(2006.01)*
**B01D 53/68** *(2006.01)* **B01D 53/14** *(2006.01)*

(52) Classification Coopérative des Brevets (CPC):
**B01D 53/508; B01D 53/685; B01J 20/041;**
**B01J 20/043; B01J 20/045; B01J 20/046;**
**B01J 20/28016; B01J 20/28059; B01J 20/28069;**
**B01J 20/28071; B01J 20/3028;** B01D 2251/404;
B01D 2251/604; B01D 2253/112; B01D 2253/25;
(Cont.)

(86) Numéro de dépôt international:
**PCT/BE2014/000067**

(87) Numéro de publication internationale:
**WO 2015/085375 (18.06.2015 Gazette 2015/24)**

(54) **COMPOSITION À BASE DE CHAUX HYDRATÉE POUR LE TRAITEMENT DE FUMÉES**

HYDRATISIERTE KALKZUSAMMENSETZUNG ZUR ABGASBEHANDLUNG

HYDRATED LIME COMPOSITION FOR EXHAUST GAS TREATMENT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.12.2013 BE 201300822**

(43) Date de publication de la demande:
**19.10.2016 Bulletin 2016/42**

(73) Titulaire: **Lime Technology Consulting S.R.L.**
**4480 Engis (Hermalle-sous-Huy) (BE)**

(72) Inventeur: **DUMONT Philippe**
**B-4470 Saint-Georges-sur-Meuse (BE)**

(74) Mandataire: **Powis de Tenbossche, Roland et al**
**Cabinet Bede S.A.**
**Boulevard Général Wahis 15**
**1030 Bruxelles (BE)**

(56) Documents cités:
WO-A1-92/09528       WO-A1-97/14650
WO-A2-2007/000433    DE-A1- 3 716 566
DE-A1- 3 826 971     JP-A- 2002 114 543
JP-A- 2010 227 865   US-A- 4 552 767
US-A- 4 604 269      US-A- 4 767 605
US-A- 5 306 475

• ANONYMOUS: "Method for producing reactive coolside sorbent", RESEARCH DISCLOSURE, KENNETH MASON PUBLICATIONS, HAMPSHIRE, UK, GB, vol. 295, no. 64, 1 November 1988 (1988-11-01), XP007113131, ISSN: 0374-4353

**(Cont. page suivante)**

(52) Classification Coopérative des Brevets (CPC):
(Cont.)
B01D 2253/306; B01D 2253/311; B01D 2257/2045;
B01D 2257/302; B01J 2220/42

(52) Classification Coopérative des Brevets (CPC):
(Cont.)
B01D 2253/306; B01D 2253/311; B01D 2257/2045;

**Description**

La présente invention se rapporte à une composition à base de chaux hydratée, à un procédé de fabrication d'une telle composition et à son utilisation pour le traitement de fumées (par voie sèche), en particulier pour l'abattement des composés soufrés et halogènes des gaz de fumées.

On entend par chaux hydratée, également appelée chaux éteinte, pulvérulente, un ensemble de particules solides, principalement constituées d'hydroxyde de calcium $Ca(OH)_2$. Cette chaux éteinte peut évidemment contenir des impuretés, telles que l'oxyde ou l'hydroxyde de magnésium, la silice, l'alumine, etc., à hauteur de quelques dizaines de grammes par kilo. D'une manière générale, la taille des particules de cette matière pulvérulente est intégralement inférieure à 1 mm et souvent inférieure à 250 $\mu$m. La chaux éteinte peut contenir de l'eau libre, à savoir non liée chimiquement au composé, jusqu'à environ 50 g/kg.

La désacidification des fumées d'incinérateurs ou de centrales électriques à charbon s'opère essentiellement sous trois formes distinctes, à savoir la voie humide, la voie sèche et la voie semi-sèche.

Dans le traitement par voie humide ou semi-sèche, on met en contact les fumées avec une solution ou suspension contenant de l'hydroxyde de calcium ou du calcaire moulu. Les gros inconvénients de ce traitement est la préparation de la solution ou suspension, mais également le traitement de boues résiduaires. De plus, ce type de procédé requiert des investissements importants.

Pour éviter les problèmes du traitement par voie humide ou semi-humide, on a proposé le traitement des fumées par voie sèche. Dans un tel traitement, les agents d'absorption sont injectés dans les fumées à l'état sec ou pulvérulent.

L'utilisation de soude, de carbonate ou de bicarbonate de sodium pulvérulent dans le traitement par voie sèche est très efficace, mais présente deux grands inconvénients, à savoir le coût et le traitement des sels résiduaires sodiques, vu leur grande solubilité.

On a également proposé d'utiliser du calcaire broyé et de la chaux éteinte dans le procédé par voie sèche. Dans un tel traitement, le taux d'utilisation de l'agent était faible, ceci en particulier vu la faible réactivité et le faible temps de contact gaz-solide.

De nombreuses recherches ont été effectuées pour améliorer le taux d'utilisation de la chaux. En effet, il s'est avéré que pour répondre aux normes de pollution, il a été nécessaire d'utiliser une quantité largement excédentaire de chaux hydratée par rapport à la quantité requise en cas de réaction totale stœchiométrique.

On a ainsi proposé de modifié l'hydroxyde de calcium, par exemple tel que décrit dans le brevet EP558522 ( correspondant à WO92/09528) ou US5306475.

Comme décrit dans WO2007/000433, "la chaux éteinte pulvérulente est utilisée dans de nombreuses applications, en particulier comme neutralisant de composés acides ($HCl$, $SO_2$, $HF$, $SO_3$...) présents dans les gaz de fumées. Dans ce procédé par "voie sèche", simple et peu coûteux, la chaux pulvérulente, utilisée comme absorbant, est directement mise en contact avec les gaz à épurer. Cependant, la réaction de neutralisation entre gaz et matière solide n'est pas aisée et un excès important de réactif calcique est souvent nécessaire par rapport à la quantité d'acide à neutraliser, afin de respecter les normes d'émission de plus en plus contraignantes. Cet excès de réactif pose surtout le problème de la génération supplémentaire de sous-produits ou résidus, à traiter en aval. Afin de réduire l'excès de réactif ou absorbant à mettre en œuvre, de nombreux produits à base de chaux éteinte pulvérulente ont été développés, de façon à obtenir une meilleure aptitude à capter des gaz acides par voie sèche encore appelé "procédé sec". En particulier, il est connu de favoriser la captation d'HCl gazeux par des chaux éteintes classiques, en combinant ces dernières à un additif, tel que les hydroxydes ou carbonates alcalins ou des chlorures alcalins [CHEN, D. et coll., International Académie Publishers, 1999, pp. 337-342]. Dans ce document, l'additif en question est ajouté à l'eau d'extinction de la chaux vive lors de la préparation de la chaux hydratée. Les auteurs observent une amélioration des performances d'abattement d'HCl gazeux de la chaux éteinte ainsi obtenue, par rapport à l'absence d'additif, à des températures de mise en oeuvre supérieures à 200°C. Par contre, aucun effet sur l'abattement de $SO_2$ n'est évoqué.

Toujours selon le document WO2007/000433, "d'autres travaux, tels que présentés dans le brevet US 4 604 269, préconisent l'ajout, à l'eau d'extinction de la chaux vive, d'additifs tels que l'hydroxyde de sodium (NaOH) à hauteur de 5% à 10% en poids, par rapport à la chaux vive, ou encore de chlorures, tels que le chlorure de calcium ($CaCl_2$). La chaux éteinte, ainsi obtenue, favorise la désulfuration des fumées à "basse" température, à savoir moins de 230°C, et de préférence moins de 175°C. En effet, l'action de l'additif se révèle lorsque la température de mise en œuvre de l'absorbant diffère du point de rosée de moins de 25°C, de préférence moins de 10°C. Dans ces conditions, l'additif a pour résultat de rendre l'absorbant déliquescent en présence d'humidité, ce qui favorise la présence d'un film liquide à l'interface solide-gaz et améliore la captation de $SO_2$."

Selon encore le document WO2007/000433, il est encore spécifié ce qui suit en ce qui concerne l'état de la technique :

"*Le document WO 88/09203 reprend ce concept d'ajout d'un composé alcalin, comme le NaOH ou de chlorures*

*tels le CaCl2, à l'eau d'extinction de la chaux vive. Les quantités et l'effet de ces additifs ne sont pas vraiment commentés. Le premier aurait le rôle d'accroître la basicité de l'absorbant, le second de retenir l'eau, comme dans le cas du brevet US 4 604 269 mentionné ci-dessus.*

*Le document [Method for producing reactive Coolside sorbent - Production of reactive sorbentfor cool-size process - by hydrating quicklime with water containing sodium chloride aqueous solution, Research Disclosure, 1988, 295(898), No. 29564, ISSN: 03744353], confirme l'influence positive pour la désulfuration dans des conditions proches de la saturation (de préférence moins de 20°C au-dessus du point de rosée) d'additifs comme $Na_2CO_3$, NaOH, CaCl2 et surtout NaCl, présent à plus de 5% en poids de l'absorbant, par ajout à l'eau d'extinction. Cependant, la chaux éteinte ainsi modifiée présente une surface spécifique BET inférieure à celle de la chaux hydratée classique, obtenue en l'absence d'additif Dans les conditions de mise en oeuvre étudiées, l'utilisation d'additifs organiques, tels les sucres et tensioactifs, n'améliore pas la désulfuration des chaux éteintes.*

*On a prévu ici de qualifier de "première génération" les absorbants de l'art antérieur à base de chaux éteinte, dont l'aptitude à capter des gaz acides a été améliorée par rapport à une chaux éteinte "classique" ou "standard", par ajout d'un additif du type de ceux précités, c'est-à-dire une modification par voie "chimique".*

*Il existe une autre classe d'absorbants à base de chaux éteinte, dont l'aptitude à capter des gaz acides est supérieure à celle d'une chaux hydratée classique. L'avantage de ces absorbants provient alors d'une modification des propriétés physiques, en l'occurrence la texture, à savoir une surface spécifique BET plus élevée et/ou un volume poreux BJH plus élevé. On qualifiera ces absorbants de "seconde génération", issu d'une modification par voie "physique", voir [OATES, J.A.H., Lime and limestone, Weinheim : Wiley-VCH, 1998, 455, pp.219- 221 ]. On connaît, par exemple du document WO97/14650, une composition de chaux pulvérulente comprenant des particules d'hydroxyde de calcium présentant une surface spécifique BET supérieure à 25 $m^2$/g et un volume poreux total BJH de désorption à l'azote d'au moins 0,1 $cm^3$/g.*

*Ce document décrit en particulier un produit à base de chaux hydratée, dont le volume poreux BJH et la surface spécifique BET sont nettement plus développés que ceux d'un hydroxyde de calcium standard. L'aptitude à capter des gaz acides d'une telle chaux hydratée est clairement améliorée par rapport à une chaux hydratée classique mais aussi par rapport à une chaux éteinte de première génération. La chaux hydratée de seconde génération selon la demande de brevet internationale WO97/14650 est considérée actuellement comme le réactif calcique le plus performant pour la captation de gaz acides par voie sèche, dans une large gamme de conditions opératoires."*

Ce document WO2007/000433 préconise une chaux pulvérulente de plus de 25$m^2$/g comprenant en outre un métal alcalin à raison de moins de 3,5% en poids. Bien que le document suggère une inefficacité de traitement avec une teneur en métal alcalin de plus de 3,5% en poids, le tableau 5 de ce document enseigne qu'une chaux de seconde génération (WO97/14650) additionnée de NaOH à raison de 50g/kg est inefficace. Une teneur de 50g/kg de NaOH correspond à une teneur en métal alcalin de (23/40) x 50g par kg, soit une teneur de 2,875% en métal alcalin.

En répétant les exemples de réalisation du document WO 2007/000433 utilisant le procédé préféré, il n'a pas été possible d'obtenir un traitement efficace des fumées, avec un taux d'utilisation important de la chaux.

L'utilisation d'une chaux hydratée additionnée de 5% en poids de sodium carbonate ou bicarbonate a déjà été testée par l'US Environmental Protection Agency, "Performance of Sorbents with and without additives, injected into a small innovative furnace", Rakes et al, 1st Joint Symposium on Dry SO2 and simultaneous SO2/NOx Control Technologies, San Diego, California, November 13, 1984.

Les conclusions de ce rapport sont que l'utilisation de sodium carbonate ou bicarbonate à raison de 5% en poids de l'absorbant à base de calcium (hydroxyde de calcium, hydroxyde de calcium et magnésium et carbonate de calcium) améliore la capture du soufre. Ce document stipule toutefois que la capture du $SO_2$ par de l'hydroxyde de calcium n'est pas fortement améliorée par l'utilisation de ces additifs (carbonate ou bicarbonate de sodium).

Lors du traitement de fumées par voie sèche par de la chaux hydratée sèche pulvérulente présentant une surface spécifique de l'ordre de 15 à 20$m^2$/g, on remarqué que le taux d'utilisation de la chaux n'était que de l'ordre de 10% dans un procédé industriel. Dès lors, il est nécessaire d'injecter un large excès de chaux pulvérulente dans les fumées pour répondre aux normes d'émission actuelles. Ainsi, industriellement, il a été requis d'injecter par rapport au $SO_2$ et HCI présents dans les fumées une quantité de chaux égale à 3,5 à 6,5 fois la quantité de chaux qui aurait été nécessaire en cas de réaction complète stœchiométrique. (Par taux d'utilisation dans le présent mémoire, on entend la quantité de chaux hydratée, exprimée en %, qui a réagi avec le $SO_2$ ou l'HCl pour former des sulfites, des sulfates ou des chlorures de calcium.)

On connaît par le document US4767605 un procédé de traitement de fumées au moyen d'absorbants qui peut comprendre par exemple du $NaHCO_3$, $NH_4HCO_3$, $Al(OH)_3$, silica gel, $Ca(OH)_2$, des sels comprenant de l'eau de cris-

tallisation tels que $CaCl_2$ ou $Al_2O_3$. Ainsi qu'il ressort de la description et des revendications de ce document, le procédé est essentiellement basé sur l'utilisation de bicarbonate de sodium pour libérer du dioxyde de carbone pour former un absorbant activé. Le document enseigne que le mélange de chaux hydraté contenant du chlorure est préparé par extinction de chaux vive en présence d'acide chlorhydrique, ce qui conduit à une chaux hydratée présentant une très faible surface spécifique. Ce document ne décrit pas un mélange comprenant une chaux hydratée à grande surface spécifique, associé à un additif et à un composé sodé permettant un taux d'utilisation améliorée de la chaux hydratée, combiné à une meilleure efficacité du traitement de désulfuration et de déchloration. Le document US4767605 ne décrit pas, ni ne suggère une composition permettant d'obtenir de tels résultats.

On connaît encore par le document US4552767 un absorbant de $CO_2$ comprenant de l'hydroxyde de calcium, de l'hydroxyde de sodium ou de potassium, et éventuellement du chlorure de calcium. Ce document ne décrit pas l'utilisation de chaux hydratée à grande surface spécifique, ni ne suggère une composition permettant un meilleur taux d'utilisation de la chaux hydratée dans le traitement des fumées, par rapport au taux obtenu au moyen d'une chaux hydratée grande surface spécifique.

Le document JP 2002-114543 enseigne la préparation de chaux hydratée préparée par extinction de chaux vive en présence d'additifs, tels que acide citrique, citrate, carbonate de sodium, carbonate de calcium et sorbitol ( voir revendication 3 dudit document).

Les document DE 37 16 566 (US5306475) et DE 38 26 971 enseignent l'utilisation d'un hydroxyde de calcium amélioré par l'ajout de substance(s) à l'eau d'extinction de la chaux vive, pour le traitement de fumées.

Le document JP 2010-227865 décrit un procédé de traitement des fumées en deux étapes successives distinctes, la première étape étant opérée au moyen d'un agent neutralisant à base de calcium, tandis que la deuxième est opérée au moyen d'un agent à base de sodium.

On a remarqué maintenant que la performance de la capture du $SO_2$ pouvait encore être améliorée en combinant à une chaux de grande surface spécifique des additifs chlorés et sulfate, ajouté à la fin de l'étape d'extinction ou après l'étape d'extinction. La composition selon l'invention s'est avérée permettre une excellente capture de composés chlorés des fumées, mais également d'autres composés présents dans les fumées, tout en assurant un excellent taux d'utilisation de l'hydroxyde de calcium pour la capture de composés acides présents dans les fumées.

L'invention a pour objet une composition pour le traitement de fumées comprenant:

- plus de 80% en poids de chaux hydratée sous forme de particules d'hydroxyde de calcium présentant une surface spécifique BET égale ou supérieure à 25 $m^2/g$, avantageusement de plus de 30 $m^2/g$, et un volume poreux total BJH égal ou supérieur à 0,1 $cm^3/g$;
- au moins un additif choisi parmi le groupe constitué de NaCl, $Na_2SO_4$ , $CaCl_2$ et leurs mélanges, le rapport en poids additif/chaux hydratée sous forme de particules d'hydroxyde de calcium présentant une surface spécifique BET égale ou supérieure à 25 $m^2/g$ et un volume poreux total BJH égal ou supérieur à 0,1 $cm^3/g$ étant compris entre 1 : 100 et 1 : 10, de préférence entre 1 : 50 et 1: 20,
- de 1 à 10% en poids, de préférence de 1 à 5% en poids d'au moins un composé sodé choisi parmi NaOH, $Na_2CO_3$, $NaHCO_3$ et leurs mélanges, et
- moins de 5% en poids, avantageusement moins de 3% en poids d'eau, de préférence moins de 1% en poids.
- De manière plus spécifique, la composition comprend en tant qu'additif au moins du NaCl et en outre comme composé sodé choisi parmi NaOH, $Na_2CO_3$, $NaHCO_3$ et leurs mélanges au moins du $Na_2CO_3$, et même essentiellement du $Na_2CO_3$.

En particulier, au moins 98% en poids, avantageusement 99% en poids de la composition suivant l'invention est constituée de chaux hydratée sous forme de particules d'hydroxyde de calcium présentant une surface spécifique BET égale ou supérieure à 25 m/g, avantageusement de plus de 30 $m^2/g$, et un volume poreux total BJH égal ou supérieur à 0,1 $cm^3/g$, de NaCl, de $Na_2CO_3$, de $NaHCO_3$ et d'eau.

Selon une forme de réalisation particulièrement préférée, au moins 98% en poids, avantageusement 99% en poids de la composition est constituée de chaux hydratée sous forme de particules d'hydroxyde de calcium présentant une surface spécifique BET égale ou supérieure à 25 $m^2/g$, avantageusement de plus de 30 $m^2/g$ et un volume poreux total BJH égal ou supérieur à 0,1 $cm^3/g$, de NaCl, de $Na_2CO_3$ et d'eau.

Selon une forme de réalisation avantageuse, le rapport en poids additif + composé sodé choisi parmi NaOH, $Na_2CO_3$, $NaHCO_3$ et leurs mélanges / chaux hydratée sous forme de particules d'hydroxyde de calcium présentant une surface spécifique BET égale ou supérieure à 25 $m^2/g$, avantageusement de plus de 30 $m^2/g$, et un volume poreux total BJH égal ou supérieur à 0,1 $cm^3/g$ est supérieur à 1 : 50, avantageusement supérieur à 1 : 20, de préférence compris entre 1: 20 et 4 : 20, plus spécifiquement entre 2:20 et 3:20.

Selon des particularités de forme de réalisation, la composition présente une ou plusieurs des particularités suivantes :

- les particules d'hydroxyde de calcium présentant une surface spécifique BET égale ou supérieure à 25 m$^2$/g, avantageusement de plus de 30 m$^2$/g, et un volume poreux total BJH égal ou supérieur à 0,1 cm$^3$/g ont une taille moyenne en poids inférieure à 100 $\mu$m, et/ou
- la composition se présente au moins partiellement sous la forme de grains avec une taille moyenne en poids comprise entre 0,5 mm 7 mm, et/ou
- la composition se présente sous la forme d'un mélange de particules d'hydroxyde de calcium de taille moyenne en poids inférieure à 100 $\mu$m et de grains de taille moyenne en poids de 0,5 mm 7 mm.

L'invention a également pour objet un procédé de préparation d'une composition suivant l'invention, ledit procédé comprenant les étapes suivantes :

- préparation d'une composition humide d'hydroxyde de calcium sous forme de particules d'hydroxyde de calcium présentant une surface spécifique BET égale ou supérieure à 25 m$^2$/g, avantageusement de plus de 30 m$^2$/g, et un volume poreux total BJH égal ou supérieur à 0,1 cm$^3$/g, ladite composition présentant une teneur en humidité comprise entre 5 et 40% en poids, avantageusement de 5 à 20% en poids, de préférence de 5 à 15% en poids (la composition humide comprend avantageusement moins de 10% en poids, de préférence moins de 5% en poids de CaO, avant son séchage);
- séchage éventuel de ladite composition humide pour obtenir une composition séchée comprenant une teneur en eau libre de moins de 10% en poids, avantageusement de moins de 5% en poids, de préférence de moins de 3% en poids, en particulier de moins 1% en poids;
- au moins une première étape d'ajout à ladite composition humide ou séchée d'hydroxyde de calcium d'un additif choisi parmi le groupe constitué de NaCl, Na$_2$SO$_4$, CaCl$_2$ et leurs mélanges, et/ou éventuellement, mais avantageusement d'un composé sodé choisi parmi le groupe constitué de NaOH, Na$_2$CO$_3$, NaHCO$_3$, et leurs mélanges, de manière à obtenir une composition humide ou sensiblement sèche d'hydroxyde de calcium et d'additif et/ou de composé sodé (Dans le cas préféré où la composition contient à la fois un additif et un composé sodé, on peut par exemple ajouter l'additif en premier et ensuite le composé sodé ou l'additif prémélangé au composé sodé ou le composé sodé en premier suivi de l'ajout de l'additif. Un prémélange sous forme de particules sèches ou de solution d'additif et de composé sodé est préféré),
- si la teneur en eau libre de la composition est supérieure à 5% en poids, séchage de la composition pour réduire sa teneur en eau libre à moins de 5% en poids, avantageusement à moins de 3% en poids, de préférence à moins de 1% en poids, et
- une deuxième étape d'ajout éventuel à ladite composition séchée d'un additif choisi parmi le groupe constitué de NaCl, Na$_2$SO$_4$, CaCl$_2$ et leurs mélanges, et/ou éventuellement, mais avantageusement d'un composé sodé choisi parmi le groupe constitué de NaOH, Na$_2$CO$_3$, NaHCO$_3$, et leurs mélanges. Ce dernier ajout est alors avantageusement effectué sous forme de particules sèches, en particulier sous forme d'un mélange sec de l'additif et du composé sodé.

Dans le procédé selon l'invention, la première étape d'ajout et la deuxième étape d'ajout éventuelle sont adaptées pour que la composition soit une composition selon l'invention telle que décrite ci-avant.

Avantageusement, l'additif est ajouté à ladite composition humide ou séchée d'hydroxyde de calcium, au moins en partie sous la forme d'une solution aqueuse ou d'une suspension aqueuse contenant au moins 25% en poids, avantageusement au moins 30% en poids, de préférence au moins 50% en poids d'additif et/ou sous forme de solide pulvérulent.

De préférence, le composé sodé choisi parmi le groupe constitué de NaOH, Na$_2$CO$_3$, NaHCO$_3$, et leurs mélanges est ajouté à ladite composition humide ou séchée d'hydroxyde de calcium, au moins en partie sous la forme d'une solution aqueuse ou d'une suspension aqueuse contenant au moins 25% en poids, avantageusement au moins 30% en poids, de préférence au moins 50% en poids d'additif et/ou sous forme de solide pulvérulent.

Selon des détails avantageux du procédé selon l'invention, le procédé de préparation présente l'une ou l'autre des particularités suivantes :

- la composition humide d'hydroxyde de calcium et d'additif et éventuellement de composé sodé choisi parmi le groupe constitué de NaOH, Na$_2$CO$_3$, NaHCO$_3$, et leurs mélanges est soumise à une étape d'agglomération et/ou de granulation, avant d'être soumise à une étape de séchage, et/ou
- on ajoute à ladite composition humide ou séchée d'hydroxyde de calcium, une composition humide ou séchée d'additif comprenant également de l'hydroxyde de calcium ou de l'oxyde de calcium, et/ou
- le séchage est opéré en mettant en contact la composition à sécher avec de l'air chaud, présentant avantageusement une température comprise entre 100°C et 250°C.

L'invention a également pour objet un procédé de traitement de fumées contenant au moins des constituants acides au moyen d'une composition suivant l'invention, dans lequel on met en contact les fumées à traiter avec la composition selon l'invention, en particulier sous forme de grains.

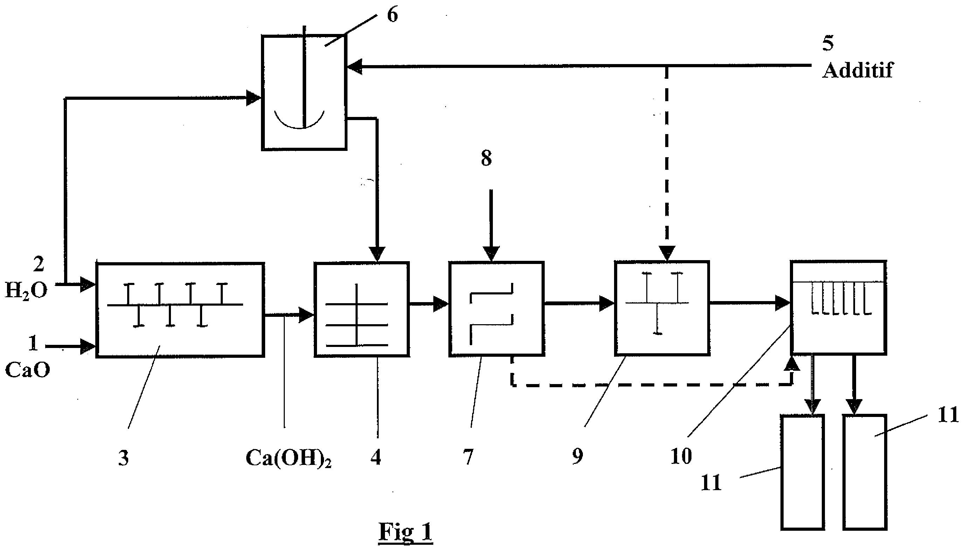

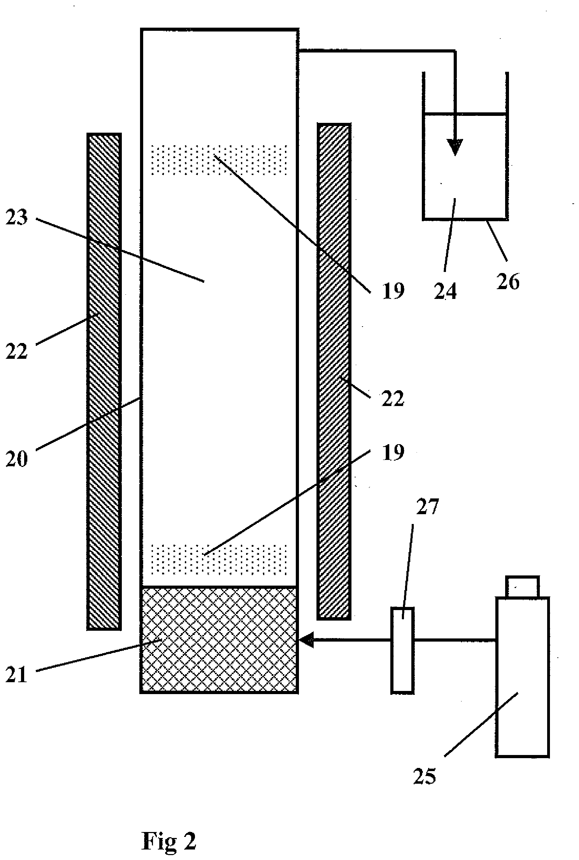

Des particularités et détails de l'invention ressortiront de la description suivante de formes de réalisation préférées de l'invention. Dans cette description, il est fait référence à la figure 1, qui montre schématiquement une installation pilote pour la préparation de composition suivant l'invention, et à la figure 2 qui représente schématiquement le dispositif utilisé pour tester des grains d'absorbants selon l'invention.

La figure 1 montre schématiquement une installation de préparation d'une composition suivant l'invention. Cette installation comprend un extincteur à pales 3 qui est alimenté en chaux vive (1) et en eau (2), éventuellement additionnée d'un agent (tel que éthylène glycol, triéthanol glycol, triéthanol amine, etc., et leurs mélanges). Tous les essais ont été réalisés à partir d'une chaux vive broyée de même réactivité. (Augmentation de température de 60°C en un temps compris entre 1 et 4 minutes). Le réglage du débit de chaux vive et d'eau est assuré par des alimentateurs ou dispositifs d'alimentation qui permettent d'ajuster la teneur optimale d'humidité (eau libre) de la chaux hydratée à la sortie de l'extincteur. Cette teneur est par exemple comprise entre 10% et 30% et fait l'objet d'un contrôle permanent de la teneur en eau libre.

La chaux hydratée humide est ensuite transférée dans un mélangeur et/ou granulateur (4) muni de pales. Selon la vitesse de rotation des pales (intensité du malaxage), le dispositif permet de mélanger les additifs (5) provenant d'une cuve, de les mettre en suspension aqueuse (cuve 6) ou de mélanger les additifs à l'état sec et pulvérulent. Le granulateur (4) permet de granuler la chaux hydratée humide par agglomération des fines particules d'hydroxyde de calcium. Avantageusement les additifs sont ajoutés sous forme de solution aqueuse.

Après incorporation et mélange des additifs en solution ou à l'état sec (9) ou après granulation (4), la composition suivant l'invention est ensuite séchée pour réduire sa teneur en eau libre à moins de 2% en poids dans un sécheur (7) alimenté en air chaud (8).

La composition sèche est soit à l'état pulvérulent ou granulé et est soumise à une filtration par un filtre ou tamis (10) pour séparer différentes fractions granulométriques de la composition, puis stockée en silos (11).

Exemple

Dans cet exemple, différentes compositions à base d'hydroxyde de calcium ont été utilisées pour le traitement de fumées. Les fumées à traiter provenaient d'une centrale thermique (puissance 2,5 MW), la teneur en soufre du charbon utilisée dans la centrale était de 1,3%. Les fumées contenaient de 1500 - 1800 mg de $SO2/Nm^3$, avec une valeur moyenne de 1650 mg $SO_2/Nm^3$. Le taux d'humidité des fumées était d'environ 12% «en volume. La température des fumées au point d'injection de l'absorbant était comprise entre 150°C et 210°C avec une température moyenne de 180°C, Le temps de contact des particules d'absorbant entraînées par le courant de fumées était de 2 à 5 secondes, auquel il faut ajouter celui du contact au niveau du filtre pour récupérer les résidus solides comme l'hydroxyde de calcium résiduel, les sulfates et les sulfites de calcium, ainsi que les cendres volantes provenant de la combustion du charbon.

La teneur en $SO_2$ a été mesurée en continu pour les fumées avant et après contact avec l'absorbant.

Les performances des différents absorbants ont été calculées sur base de valeurs stabilisées durant 30 minutes. Le taux d'abattement des gaz acides, ainsi que le taux de désulfuration ou de déchloration ont été calculés de la manière suivante :

Soit $[HCl]_0$ et $[SO_2]_0$ les teneurs en HCl et $SO_2$ des fumées avant traitement, et $[HCl]_f$ et $[SO_2]_f$ les teneurs en HCl et $SO_2$ des fumées après traitement,

le taux de déchloration (exprimé en %) est égal à :

$$(([HCl]_0 - [HCl]_f) / [HCl]_0) \times 100,$$

et

le taux de désulfuration (exprimé en %) est égal à :

$$(([SO_2]_0 - [SO_2]_f) / [SO_2]_0) \times 100$$

Le taux d'utilisation des absorbants ou le rendement en solide est déterminé en fonction des stœchiométries des réactions de la chaux hydratée avec $SO_2$ et HCl [ et donc du rapport Ca/S ou Ca/2HCl].

Pour comparer les performances de compositions selon l'invention à celles de compositions non selon l'invention, neuf absorbants ont été préparés.

Absorbant I : chaux hydratée non selon l'invention - comparatif

Cet absorbant a été préparé en utilisant le procédé décrit dans EP0558528. La chaux vive a été éteinte avec un large excès d'eau contenant de l'éthylène glycol. Avant séchage, l'hydroxyde de calcium humide avait une teneur en eau libre de 20%. Après séchage, la teneur en humidité était de moins de 1% en poids. Après séchage avec de l'air chaud, la chaux hydratée avait une surface spécifique de 39 $m^2$/g.

Le produit sec présentait une teneur en eau de moins de 1 % en poids.

Absorbant II : chaux hydratée avec NaOH non selon l'invention

On éteint la chaux vive de la même manière que pour l'absorbant I. Après extinction et avant séchage, une solution aqueuse de soude (NaOH - concentration en soude de 30% en poids) est mélangée à la chaux éteinte humide. Le mélange est ensuite séché. La quantité de soude ajoutée est adaptée pour obtenir une concentration en soude de 1,22% par rapport au poids sec de la composition. Le produit sec présentait une teneur en eau de moins de 1 % en poids.

Absorbant III : chaux hydratée avec NaOH préparée selon le procédé décrit dans WO2007/000433 - comparatif

On éteint la chaux vive avec une solution aqueuse contenant de la soude. Après extinction, la chaux avait une teneur en humidité de 10%. La quantité de soude ajouté est adaptée pour que la chaux présente, après séchage, une teneur en NaOH de 1,22% en poids. Le produit sec présentait une teneur en eau de moins de 1% en poids.

Absorbant IV : chaux hydratée avec NaCl non selon l'invention

On éteint la chaux vive avec une solution aqueuse contenant du NaCl. Après - extinction, la chaux avait une teneur en humidité de 10%. La quantité de soude ajouté est adaptée pour que la chaux présente, après séchage, une teneur en NaCl de 3% en poids. La chaux hydratée présentait une surface spécifique de moins de 20 $m^2$/g.

Le produit sec présentait une teneur en eau de moins de 1% en poids.

Absorbant V : chaux hydratée avec $CaCl_2$ non selon l'invention

On éteint la chaux vive avec une solution aqueuse contenant du $CaCl_2$. Après extinction, la chaux avait une teneur en humidité de 10%. La quantité de soude ajouté est adaptée pour que la chaux présente, après séchage, une teneur en $CaCl_2$ de 3% en poids. La chaux hydratée présentait une surface spécifique de moins de 20 $m^2$/g.

Le produit sec présentait une teneur en eau de moins de 1% en poids.

Absorbant VI : chaux hydratée avec $Na_2SO_4$ non selon l'invention

On éteint la chaux vive avec une solution aqueuse contenant du $Na_2SO_4$ . Après extinction, la chaux avait une teneur en humidité de 10%. La quantité de soude ajouté est adaptée pour que la chaux présente, après séchage, une teneur en $Na_2SO_4$ de 3% en poids. La chaux hydratée présentait une surface spécifique de moins de 20 $m^2$/g.

Le produit sec présentait une teneur en eau de moins de 1% en poids.

Absorbant VII : chaux hydratée avec NaOH et NaCl selon l'invention

On prépare cet absorbant VII de manière identique à l'absorbant II, sauf que la solution de soude ajoutée à la chaux éteinte humide contenait du NaCl. La quantité de NaCl ajoutée à la solution de soude était adaptée pour obtenir une teneur en NaCl de 8% par rapport au poids sec de la composition. La surface spécifique BET de la chaux est d'environ 40 $m^2$/g.

La teneur en eau était de moins de 0,5% en poids.

Absorbant VIII : chaux hydratée avec NaCl et $Na_2CO_3$-selon l'invention

On prépare cet absorbant VIII de manière identique à l'absorbant VII, sauf que l'on utilise du $Na_2CO_3$ au lieu de NaOH. La teneur en NaCl du produit sec est de 3%, tandis que la teneur en $Na_2CO_3$ du produit sec était d'environ 10%. La surface spécifique de la chaux hydratée est d'environ 40 $m^2$/g.

La teneur en eau était de moins de 0,5% en poids.

Absorbant IX : chaux hydratée avec NaCl, et $NaHCO_3$ selon l'invention

On prépare cet absorbant IX de manière identique à l'absorbant VII, sauf que l'on utilise du $NaHCO_3$ au lieu de NaOH. La teneur en NaCl du produit sec est de 3%, tandis que la teneur en $NaHCO_3$ du produit sec était d'environ 7%.
La surface spécifique de la chaux hydratée est d'environ 40 $m^2$/g. La teneur en eau était de moins de 0,5% en poids.

Absorbant X :chaux hydratée avec $Na_2CO3$ et $CaCl_2$. selon l'invention

On prépare cet absorbant VII de manière similaire pour l'absorbant VII, si ce n'est que la quantité de $Na_2CO_3$ et de chlorure de calcium utilisée était adaptée pour que l'absorbant sec contienne 5% de $Na_2CO_3$ et 7% de chlorure de calcium.
La surface spécifique de la chaux hydratée est d'environ 40 $m^2$/g. La teneur en eau était de moins de 0,5% en poids.

Absorbant XI : chaux hydratée avec $Na_2CO3$et $Na_2SO_4$. selon l'invention

On prépare cet absorbant XI de manière similaire pour l'absorbant X, si ce n'est que la quantité de carbonate de sodium et de sulfate de sodium utilisée était adaptée pour que l'absorbant sec contienne 1,61% en poids de carbonate de sodium et 13,24% en poids de sulfate de sodium. La surface spécifique de la chaux était d'environ 37 $m^2$/g. La teneur en eau était de moins de 0,5% en poids.

Absorbant XII : chaux hydratée avec $Na_2CO_3$ et NaCl. selon l'invention

On prépare cet absorbant XII de manière similaire pour l'absorbant VII, si ce n'est que la quantité de carbonate de sodium et de chlorure de sodium utilisée était adaptée pour que l'absorbant sec contienne 3,45% en poids de carbonate de sodium et 8,9% en poids de chlorure de sodium. La surface spécifique de la chaux était d'environ 38 $m^2$/g. La teneur en eau était de moins de 0,5% en poids.
Le tableau 1 suivant donne le taux de désulfuration ou le taux d'abattement de $SO_2$, ainsi que le taux d'utilisation des absorbants en % en tenant compte d'un rapport stœchiométrique Ca/S de 2 pour tous les essais de l'exemple 1.

Tableau 1

| Absorbant | Taux de désulfuration (en %) | taux d'utilisation de l'absorbant (en %) |
|---|---|---|
| I | 36 | 18 |
| II | moins de 40 | moins de 20 |
| III | moins de 40 | moins de 20 |
| IV | moins de 40 | moins de 20 |
| V | moins de 40 | moins de 20 |
| VI | moins de 40 | moins de 20 |
| VII | plus de 50 | plus de 25 |
| VIII | plus de 60 | plus de 30 |
| IX | plus de 60 | plus de 30 |
| X | plus de 60 | plus de 30 |
| XI | plus de 60 | plus de 30 |
| XII | plus de 70 | plus de 35 |

Il ressort de ce tableau que les absorbants selon l'invention (VII à XII) permettent un taux de désulfuration et un taux d'utilisation supérieur à ceux des absorbants I à VI. L'utilisation de sels NaCl, $CaCl_2$ et $Na_2SO_4$ en combinaison avec une chaux hydratée de surface BET de plus de 25 $m^2$/g, et avantageusement en présence de $Na_2CO_3$ avait

clairement un effet de synergie pour la désulfuration. Parmi les absorbants selon l'invention, les absorbants comprenant (a) de la chaux hydratée, (b) du $NaHCO_3$ et/ou du $Na_2CO_3$, et (c) du NaCl et/ou du $Na_2SO_4$ et (d) d'eau sont préférés, car permettant un taux d'utilisation de l'absorbant amélioré de plus de 50% par rapport au taux obtenu pour la chaux hydratée grande surface spécifique ou pour les absorbants II et III.

Les absorbants I, VII à XII ont été granulés avant leur séchage pour étudier les propriétés d'absorption ou de captation des grains. Les grains avaient une forme sensiblement sphérique de diamètre moyen en poids d'environ 3mm.

Ces absorbants en grains ont été testés de la manière suivante.

On a placé une quantité déterminée de grains d'absorbant 19 dans une colonne en verre en Pyrex (20). Ces grains étaient déposés sur une couche de laine de verre 21. Ces grains forment un lit fixe 23.

On introduit dans la colonne (au niveau de la couche de laine de verre 21) une quantité connue de $SO_2$ ou de HCl au moyen d'un débitmètre à pointeau 27. Le gaz à capter provient d'une bonbonne 25. La température du milieu à l'intérieur de la colonne 20 est réglée par un manteau chauffant 22 (par exemple à une température comprise entre 100°C et 110°C). Le temps de contact entre le gaz et l'absorbant est d'environ 30 minutes, tandis que la quantité de gaz introduit dans la colonne est adaptée par rapport à la stœchiométrie de la réaction de manière à avoir un rapport Ca/S = 1 ou Ca/2HCl = 1. Le gaz acide qui n'a pas réagi avec l'absorbant est absorbé par barbotage (dans la cuve 26) dans une solution de soude caustique en quantité et titre connus (24). Le bilan du test (pour déterminer la quantité de $SO_2$ ou de HCl capté) est réalisé par analyse de l'absorbant et par titrage de la quantité de soude résiduelle.

Le tableau 2 suivant donne les taux de désulfuration et de déchloration (en %) en utilisant des absorbants sous forme de grains.

Tableau 2

| Absorbant | Surface spécifique BET m$^2$/g | Taux de désulfuration (en %) | taux de déchloration (en %) |
|---|---|---|---|
| I | plus de 30 | moins de 60 | moins de 70 |
| VII | plus de 30 | plus de 80 | plus de 90 |
| VIII | plus de 30 | plus de 80 | plus de 90 |
| IX | plus de 30 | plus de 80 | plus de 90 |
| X | plus de 30 | plus de 80 | plus de 90 |
| XI | plus de 30 | plus de 80 | plus de 90 |
| XII | plus de 30 | plus de 80 | plus de 90 |

Les taux de désulfuration et de déchloration obtenus avec les absorbants selon l'invention sont compris entre 80 et 97%, revenant à dire à un taux d'utilisation de la chaux de 40 à 50% avec un rapport Ca/S ou Ca/2HCl de 1.

**Revendications**

1. Composition pour le traitement de fumées comprenant :

   - plus de 80% en poids de chaux hydratée sous forme de particules d'hydroxyde de calcium présentant une surface spécifique BET égale ou supérieure à 25 m$^2$/g et un volume poreux total BJH égal ou supérieur à 0,1 cm$^3$/g;
   - au moins un additif choisi parmi le groupe constitué de NaCl, $Na_2SO_4$ CaCl$_2$ et leurs mélanges, le rapport en poids additif/chaux hydratée sous forme de particules d'hydroxyde de calcium présentant une surface spécifique BET égale ou supérieure à 25 m$^2$/g et un volume poreux total BJH égal ou supérieur à 0,1 cm$^3$/g étant compris entre 1 : 100 et 1 : 10, de préférence entre 1 : 50 et 1: 20,
   - de 1 à 10% en poids, de préférence de 1 à 5% en poids d'au moins un composé sodé choisi parmi NaOH, $Na_2CO_3$, $NaHCO_3$ et leurs mélanges, et
   - moins de 5% en poids, avantageusement moins de 3% en poids d'eau, de préférence moins de 1% en poids.

2. Composition suivant la revendication 1, **caractérisée en ce qu'**elle comprend en tant qu'additif au moins du NaCl et en outre comme composé sodé choisi parmi NaOH, $Na_2CO_3$, $NaHCO_3$ et leurs mélanges, au moins du $Na_2CO_3$, essentiellement du $Na_2CO_3$.

3. Composition suivant l'une quelconque des revendications 1 et 2, **caractérisée en ce qu'**au moins 98% en poids, avantageusement 99% en poids de la composition est constituée (a) de chaux hydratée sous forme de particules d'hydroxyde de calcium présentant une surface spécifique BET égale ou supérieure à 25 m$^2$/g et un volume poreux total BJH égal ou supérieur à 0,1 cm$^3$/g, (b) de NaCl, et (c) de Na$_2$CO$_3$ et/ou de NaHCO$_3$ et (d) d'eau.

4. Composition suivant l'une quelconque des revendications 1 et 2, **caractérisée en ce qu'**au moins 98% en poids, avantageusement 99% en poids de la composition est constituée de chaux hydratée sous forme de particules d'hydroxyde de calcium présentant une surface spécifique BET égale ou supérieure à 25 m$^2$/g et un volume poreux total BJH égal ou supérieur à 0,1 cm$^3$/g, de NaCl, de Na$_2$CO$_3$ et d'eau.

5. Composition suivant l'une quelconque des revendications 1 à 4, **caractérisée en ce que** le rapport en poids additif + composé sodé choisi parmi NaOH, Na$_2$CO$_3$, NaHCO$_3$ et leurs mélanges / chaux hydratée sous forme de particules d'hydroxyde de calcium présentant une surface spécifique BET égale ou supérieure à 25 m$^2$/g et un volume poreux total BJH égal ou supérieur à 0,1 cm$^3$/g est supérieur à 1 : 50, avantageusement supérieur à 1 : 20, de préférence compris entre 1: 20 et 4 : 20, plus spécifiquement entre 2:20 et 3:20.

6. Composition suivant l'une quelconque des revendications précédentes, **caractérisée en ce que** les particules d'hydroxyde de calcium présentant une surface spécifique BET égale ou supérieure à 25 m$^2$/g et un volume poreux total BJH égal ou supérieur à 0,1 cm$^3$/g ont une taille moyenne en poids inférieure à 100 $\mu$m.

7. Composition suivant l'une quelconque des revendications 1 à 6, **caractérisée en ce qu'**elle se présente sous la forme de grains avec une taille moyenne en poids comprise entre 0,5 mm 7 mm.

8. Composition suivant l'une quelconque des revendications 1 à 7, **caractérisée en ce qu'**elle se présente sous la forme d'un mélange de particules d'hydroxyde de calcium de taille moyenne en poids inférieure à 100 $\mu$m et de grains de taille moyenne en poids de 0,5 mm 7 mm.

9. Procédé de préparation d'une composition suivant l'une quelconque des revendications précédentes, ledit procédé comprenant les étapes suivantes :

   - préparation d'une composition humide d'hydroxyde de calcium sous forme de particules d'hydroxyde de calcium présentant une surface spécifique BET égale ou supérieure à 25 m$^2$/g et un volume poreux total BJH égal ou supérieur à 0,1 cm$^3$/g, ladite composition humide présentant une teneur en humidité comprise entre 5 et 40% en poids, avantageusement de 5 à 20% en poids, de préférence de 5 à 15% en poids;
   - séchage éventuel de ladite composition humide pour obtenir une composition séchée comprenant une teneur en eau libre de moins de 10% en poids, avantageusement de moins de 5% en poids, de préférence de moins de 3% en poids, en particulier de moins 1% en poids;
   - au moins une première étape d'ajout à ladite composition humide ou séchée d'hydroxyde de calcium d'un additif choisi parmi le groupe constitué de NaCl, Na$_2$SO$_4$, CaCl$_2$ et leurs mélanges, et/ou d'un composé sodé choisi parmi le groupe constitué de NaOH, Na$_2$CO$_3$, NaHCO$_3$, et leurs mélanges, de manière à obtenir une composition humide ou sensiblement sèche d'hydroxyde de calcium et d'additif et/ou de composé sodé,
   - si la teneur en eau libre de la composition est supérieure à 5% en poids, séchage de la composition pour réduire sa teneur en eau libre à moins de 5% en poids, avantageusement à moins de 3% en poids, de préférence à moins de 1% en poids, et
   - une deuxième étape éventuelle d'ajout à ladite composition séchée d'un additif choisi parmi le groupe constitué de NaCl, Na$_2$SO$_4$, CaCl$_2$ et leurs mélanges, et éventuellement d'un composé sodé choisi parmi le groupe constitué de NaOH, Na$_2$CO$_3$, NaHCO$_3$, et leurs mélanges,

   étant entendu que la première étape d'ajout et la deuxième étape d'ajout éventuelle sont adaptées pour que la composition soit une composition selon l'une quelconque des revendications 1 à 8.

10. Procédé suivant la revendication 9, **caractérisé en ce que** l'additif est ajouté à ladite composition humide ou séchée d'hydroxyde de calcium, au moins en partie sous la forme d'une solution aqueuse ou d'une suspension aqueuse contenant au moins 25% en poids, avantageusement au moins 30% en poids, de préférence au moins 50% en poids d'additif et/ou sous forme de solide pulvérulent.

11. Procédé suivant la revendication 9 ou 10, **caractérisé en ce que** le composé sodé choisi parmi le groupe constitué de NaOH, Na$_2$CO$_3$, NaHCO$_3$, et leurs mélanges est ajouté à ladite composition humide ou séchée d'hydroxyde de calcium, au moins en partie sous la forme d'une solution aqueuse ou d'une suspension aqueuse contenant au moins 25% en poids, avantageusement au moins 30% en poids, de préférence au moins 50% en poids d'additif et/ou sous forme de solide pulvérulent.

**12.** Procédé suivant la revendication 9 ou 10 ou 11, **caractérisé en ce que** la composition humide d'hydroxyde de calcium et d'additif et éventuellement de composé sodé choisi parmi le groupe constitué de NaOH, Na$_2$CO$_3$, NaHCO$_3$, et leurs mélanges est soumise à une étape d'agglomération et/ou de granulation, avant d'être soumise à une étape de séchage.

**13.** Procédé suivant l'une quelconque des revendications 9 à 12, **caractérisé en ce qu'**on ajoute à ladite composition humide ou séchée d'hydroxyde de calcium, une composition humide ou séchée d'additif comprenant également de l'hydroxyde de calcium ou de l'oxyde de calcium.

**14.** Procédé suivant l'une quelconque des revendications 9 à 13, **caractérisé en ce que** le séchage est opéré en mettant en contact la composition à sécher avec de l'air chaud, présentant avantageusement une température comprise entre 100°C et 250°C.

**15.** Procédé de traitement de fumées contenant au moins des constituants acides au moyen d'une composition suivant l'une quelconque des revendications 1 à 8, dans lequel on met en contact les fumées à traiter avec la composition selon l'une des revendications 1 à 8, en particulier sous forme de grains.

## Patentansprüche

**1.** Zusammensetzung zur Aufbereitung von Rauchgasen umfassend:

- mehr als 80 Gew.-% Kalkhydrat in Form von Calciumhydroxidteilchen mit einer spezifischen Oberfläche BET von 25 m$^2$/g oder mehr und einem Porenvolumen BJH von 0,1 cm$^3$/g oder mehr;
- mindestens ein Additiv, das aus der Gruppe bestehend aus NaCl, Na$_2$SO$_4$, CaCl$_2$ und Mischungen davon, wobei das Gewichtsverhältnis Additiv /Kalkhydrat in Form von Calciumhydroxidteilchen mit einer spezifischen Oberfläche BET von 25 m$^2$/g oder mehr und einem Porenvolumen BJH von 0,1 cm$^3$/g oder mehr zwischen 1:100 und 1:10, bevorzugt zwischen 1:50 und 1:20 liegt,
- 1 bis 10 Gew.-%, vorzugsweise 1 bis 5 Gew.-%, mindestens einer Natriumverbindung, ausgewählt aus NaOH, Na$_2$CO$_3$, NaHCO$_3$ und Mischungen davon, und
- weniger als 5 Gew.-%, vorzugsweise weniger als 3 Gew.-% Wasser, bevorzugt weniger als 1 Gew.-%.

**2.** Zusammensetzung nach Anspruch 1, **dadurch gekennzeichnet, dass** sie als Additiv mindestens NaCl und zusätzlich eine Natriumverbindung enthält, ausgewählt aus NaOH, Na$_2$CO$_3$, NaHCO$_3$ und deren Mischungen, mindestens Na$_2$CO$_3$, hauptsächlich Na$_2$CO$_3$.

**3.** Zusammensetzung nach einem der Ansprüche 1 und 2, **dadurch gekennzeichnet, dass** mindestens 98 Gew.-%, vorzugsweise 99 Gew.-% der Zusammensetzung aus (a) Kalkhydrat in Form von Calciumhydroxidteilchen mit einer spezifischen Oberfläche BET von 25 m$^2$/g oder mehr und einem Porenvolumen BJH von 0,1 cm3/g oder mehr, (b) NaCl und (c) Na$_2$CO$_3$ und/oder NaHCO$_3$ und (d) Wasser besteht.

**4.** Zusammensetzung nach einem der Ansprüche 1 und 2, **dadurch gekennzeichnet, dass** mindestens 98 Gew.-%, vorzugsweise 99 Gew.-% der Zusammensetzung aus Kalkhydrat in Form von Calciumhydroxidteilchen mit einer spezifischen Oberfläche BET von 25 m$^2$/g oder mehr und einem Porenvolumen BJH von 0,1 cm$^3$/g oder mehr, NaCl, NaCO$_3$ und Wasser besteht.

**5.** Zusammensetzung nach einem der Ansprüche 1 bis 4, **dadurch gekennzeichnet, dass** das Gewichtsverhältnis von Additiv + Natriumverbindung, ausgewählt aus NaOH, Na$_2$CO$_3$, NaHCO$_3$ und deren Mischungen/Kalkhydrat in Form von Calciumhydroxidteilchen mit einer spezifischen Oberfläche BET von 25 m$^2$/g oder mehr und einem Porenvolumen BJH von 0,1 cm$^3$/g oder mehr, größer als 1:50, vorzugsweise größer als 1:20, bevorzugt zwischen 1:20 und 4:20, insbesondere zwischen 2:20 und 3:20, ist.

**6.** Zusammensetzung nach einem der vorhergehenden Ansprüche, **dadurch gekennzeichnet, dass** die Calciumhydroxidteilchen mit einer spezifischen Oberfläche BET 25 m$^2$/g oder mehr und einem Porenvolumen BJH von 0,1 cm$^3$/g oder mehr eine gewichtsgemittelte Größe von weniger als 100 $\mu$m aufweisen.

7. Zusammensetzung nach einem der Ansprüche 1 bis 6, **dadurch gekennzeichnet, dass** sie in Form von Körnern mit einer gewichtsgemittelten Größe zwischen 0,5 mm und 7 mm vorliegt.

8. Zusammensetzung nach einem der Ansprüche 1 bis 7, **dadurch gekennzeichnet, dass** sie in Form einer Mischung aus Calciumhydroxidteilchen mit einer gewichtsgemittelten Größe von weniger als 100 $\mu$m und Körnern mit einer gewichtsgemittelten Größe von 0,5 mm bis 7 mm vorliegt.

9. Verfahren zur Herstellung einer Zusammensetzung nach einem der vorhergehenden Ansprüche, wobei das Verfahren die folgenden Schritte umfasst:

   - Herstellung einer feuchten Calciumhydroxidzusammensetzung in Form Calciumhydroxidteilchen mit einer spezifischen Oberfläche BET von 25 m$^2$/g oder mehr und einem Porenvolumen BJH von 0,1 cm$^3$/g oder mehr, wobei die feuchte Zusammensetzung einen Feuchtigkeitsgehalt zwischen 5 und 40 Gew.-%, vorzugsweise 5 bis 20 Gew.-%, bevorzugt 5 bis 15 Gew.-%, aufweist;
   - optionales Trocknen der nassen Zusammensetzung, um eine getrocknete Zusammensetzung zu erhalten, die einen Wassergehalt von weniger als 10 Gew.-%, vorzugsweise weniger als 5 Gew.-%, bevorzugt weniger als 3 Gew.-% und bevorzugt weniger als 1 Gew.-% umfasst;
   - mindestens einen ersten Schritt der Zugabe eines Additivs, ausgewählt aus der Gruppe bestehend aus NaCl, Na$_2$SO$_4$, CaCl$_2$ und Mischungen davon, und/oder einer Natriumverbindung, ausgewählt aus der Gruppe bestehend aus NaOH, Na$_2$CO$_3$, NaHCO$_3$ und Mischungen davon, zu der feuchten oder getrockneten Calciumhydroxid-Zusammensetzung, um Folgendes zu erhalten eine feuchte oder im Wesentlichen trockene Zusammensetzung aus Calciumhydroxid und einem Additiv und/oder einer Natriumverbindung,
   - wenn der freie Wassergehalt in der Zusammensetzung über 5 Gew.-% liegt, Trocknen der Zusammensetzung, um ihren freien Wassergehalt auf weniger als 5 Gew.-%, vorzugsweise weniger als 3 Gew.-%, vorzugsweise weniger als 1 Gew.-%, zu reduzieren, und
   - einen optionalen zweiten Schritt der Zugabe eines Additivs, ausgewählt aus der Gruppe bestehend aus NaCl, Na$_2$SO$_4$, CaCl$_2$ und Mischungen davon, und optional einer Natriumverbindung, ausgewählt aus der Gruppe bestehend aus NaOH, Na$_2$CO$_3$, NaHCO$_3$ und Mischungen davon, zu der getrockneten Zusammensetzung, mit der Maßgabe, dass der erste Schritt der Zugabe und der optionale zweite Schritt der Zugabe so angepasst sind, dass die Zusammensetzung eine Zusammensetzung nach einem der Ansprüche 1 bis 8 ist.

10. Verfahren nach Anspruch 9, **dadurch gekennzeichnet, dass** das Additiv der feuchten oder getrockneten Calciumhydroxid-Zusammensetzung zumindest teilweise in Form einer wässrigen Lösung oder einer wässrigen Suspension, die mindestens 25 Gew.-%, vorzugsweise mindestens 30 Gew.-%, bevorzugt mindestens 50 Gew.-% ein Additiv enthält, und/oder in Form eines pulverförmigen Feststoffs zugesetzt wird.

11. Verfahren nach Anspruch 9 oder 10, **dadurch gekennzeichnet, dass** die Natriumverbindung, die aus der Gruppe ausgewählt ist, die aus NaOH, Na$_2$CO$_3$, NaHCO$_3$ und deren Mischungen besteht, der feuchten oder getrockneten Calciumhydroxidzusammensetzung zumindest teilweise in Form einer wässrigen Lösung oder einer wässrigen Suspension zugesetzt wird, die mindestens 25 Gew.-%, vorzugsweise mindestens 30 Gew.-%, bevorzugt mindestens 50 Gew.-% des Additivs und/oder in Form eines pulverförmigen Feststoffs enthält.

12. Verfahren nach Anspruch 9 oder 10 oder 11, **dadurch gekennzeichnet, dass** die feuchte Zusammensetzung aus Calciumhydroxid und einem Additiv und optional einer Natriumverbindung, ausgewählt aus der Gruppe bestehend aus NaOH, Na$_2$CO$_3$, NaHCO$_3$ und Mischungen davon, einem Agglomerations und/oder Granulationsschritt unterzogen wird, bevor sie einem Trocknungsschritt unterzogen wird.

13. Verfahren nach einem der Ansprüche 9 bis 12, **dadurch gekennzeichnet, dass** der feuchten oder getrockneten Calciumhydroxid-Zusammensetzung eine feuchte oder getrocknete Additiv-Zusammensetzung zugesetzt wird, die ebenfalls Calciumhydroxid oder Calciumoxid umfasst.

14. Verfahren nach einem der Ansprüche 9 bis 13, **dadurch gekennzeichnet, dass** das Trocknen dadurch erfolgt, dass die zu trocknende Zusammensetzung mit heißer Luft in Kontakt gebracht wird, die vorzugsweise eine Temperatur zwischen 100°C und 250°C aufweist.

15. Verfahren zur Aufbereitung von Rauchgasen, die mindestens saure Bestandteile enthalten, mit Hilfe einer Zusammensetzung nach einem der Ansprüche 1 bis 8, bei dem man die zu aufbereitenden Rauchgase mit der Zusammensetzung nach einem der Ansprüche 1 bis 8, insbesondere in Form von Körnern, in Kontakt bringt.

**Claims**

1. Composition for treating fumes comprising:

   - more than 80% by weight of hydrated lime in the form of particles of calcium hydroxide having a BET specific surface area equal to or greater than 25 $m^2$ /g and a BJH total pore volume equal to or greater than 0.1 $cm^3$ /g;
   - at least one additive selected from the group consisting of NaCl, $Na_2SO_4$, $CaCl_2$ and mixtures thereof, the ratio by weight additive / hydrated lime in the form of particles of calcium hydroxide having a BET specific surface area equal to or greater than 25 $m^2$ /g and a BJH total pore volume equal to or greater than 0.1 $cm^3$ /g being comprised between 1:100 and 1:10, preferably between 1:50 and 1:20;
   - from 1 to 10% by weight, preferably from 1 to 5% by weight of at least one sodium compound selected from the group consisting of NaOH, $Na_2CO_3$, $NaHCO_3$ and mixtures thereof, and
   - less than 5% by weight, advantageously less than 3% by weight, preferably less than 1% by weight of water.

2. The composition of claim 1, **characterized in that** it comprises as additive at least NaCl and moreover as sodium compound selected from NaOH, $Na_2CO_3$, $NaHCO_3$ and mixtures thereof, at least $Na_2CO_3$, essentially $Na_2CO_3$.

3. The composition of any one of the claims 1 and 2, **characterized in that** at least 98% by weight, advantageously 99% by weight of the composition consists of (a) hydrated lime in the form of particles of calcium hydroxide having a BET specific surface area equal to or greater than 25 $m^2$ /g and a BJH total pore volume equal to or greater than 0.1 $cm^3$ /g, (b) NaCl, and (c) $Na_2CO_3$ and/or $NaHCO_3$, and (d) water.

4. The composition of any one of the claims 1 and 2, **characterized in that** at least 98% by weight, advantageously 99% by weight of the composition consists of hydrated lime in the form of particles of calcium hydroxide having a BET specific surface area equal to or greater than 25 $m^2$ /g and a BJH total pore volume equal to or greater than 0.1 $cm^3$ /g, NaCl, $Na_2CO_3$ and water.

5. The composition of any one of the claims 1 to 4, in which the ratio by weight additive + sodium compound selected from NaOH, $Na_2CO_3$, $NaHCO_3$ and mixtures thereof / hydrated lime in the form of particles of calcium hydroxide having a BET specific surface area equal to or greater than 25 $m^2$ /g and a BJH total pore volume equal to or greater than 0.1 $cm^3$ /g is higher than 1:50, advantageously higher than 1:20, preferably comprised between 1:20 and 4:20, more specifically between 2:20 and 3:20.

6. The composition of any one of the preceding claims, **characterized in that** the hydrated lime in the form of particles of calcium hydroxide having a BET specific surface area equal to or greater than 25 $m^2$ /g and a BJH total pore volume equal to or greater than 0.1 $cm^3$ /g has a weight average particle size of less than 100 μm.

7. The composition of any one of the claims 1 to 6, **characterized in that** it has the form of grains having an average size by weight of between 0.5 mm and 7 mm.

8. The composition of any one of the claims 1 to 7, **characterized in that** it is in the form of a mixture of calcium hydroxide particles having a weight average size of less than 100 μm, and of grains having an average size by weight of from 0.5 mm to 7 mm.

9. A method for preparing a composition according to any one of the preceding claims, said method comprising the following steps:

   - preparing a humid calcium hydroxide composition in the form of particles of calcium hydroxide having a BET specific surface area equal to or greater than 25 $m^2$ /g and a BJH total pore volume equal to or greater than 0.1 $cm^3$ /g , said humid composition having a moisture content comprised between 5 and 40% by weight, advantageously from 5 to 20% y weight, preferably between 5 and 15% by weight;
   - possible drying of said humid composition for obtaining a dried composition comprising a free water content of less than 10% by weight, advantageously less than 5% by weight, preferably less than 3% by weight, in particular less than 1% by weight;
   - at least one first addition step to said humid or dried composition of calcium hydroxide, of an additive selected from the group consisting of NaCl, $Na_2SO_4$, $CaCl_2$ and mixtures thereof, and/or of a sodium compound selected from the group consisting of NaOH, $Na_2CO_3$, $NaHCO_3$ and mixtures thereof, so as to obtain a humid or substantially dried composition of calcium hydroxide and of additive and/or sodium compound,

- in case the free water content of the composition is higher than 5% by weight, drying of the composition for reducing its free water content to less than 5% by weight, advantageously to less than 3% by weight, preferably to less than 1% by weight, and
- possibly a second addition step to said dried composition of an additive selected from the group consisting of NaCl, $Na_2SO_4$, $CaCl_2$ and mixtures thereof, and/or of a sodium compound selected from the group consisting of NaOH, $Na_2CO_3$, $NaHCO_3$ and mixtures thereof, provided that the first addition step and the possible second addition step are adapted so that the composition is a composition according to any one of the claims 1 to 8.

10. The method of claim 9, **characterized in that** the additive is added to the humid or dried composition of calcium hydroxide, at least partly in the form of an aqueous solution or an aqueous suspension comtaining at least 25% by weight, advantageously at least 30% by weight, preferably at least 50% by weight of additive and/or in the form of a powdery solid.

11. The method of claim 9 or 10, **characterized in that** the sodium compound selected from the group consisting of NaOH, $Na_2CO_3$, $NaHCO_3$ and mixtures thereof is added to the humid or dried composition of calcium hydroxide, at least partly in the form of an aqueous solution or an aqueous suspension comtaining at least 25% by weight, advantageously at least 30% by weight , preferably at least 50% by weight of additive and/or in the form of a powdery solid.

12. The method of claim 9 or 10 or 11, **characterized in that** the humid or dried composition of calcium hydroxide and additive and possibly sodium compound selected from the group consisting of NaOH, $Na_2CO_3$, $NaHCO_3$ and mixtures thereof is submitted to an agglomeration and/or granulation step, prior being submitted to a drying step.

13. The method of any one of the claims 9 to 12, **characterized in that**, to the humid or dried composition of calcium hydroxide, a humid or dried composition of additive comprising also calcium hydroxide or calcium oxide is added.

14. The method of any one of the claims 9 to 13, **characterized in that** the drying is carried out by contacting the composition to be dried with hot air having advantageously a temperature comprised between 100°C and 250°C.

15. A process for treating fumes containing at least acid components by means of a composition according to any one of the claims 1 to 8, in which the fumes to be treated are contacted with a composition according to any one of the claims 1 to 8, in particular in the form of grains.

EP 3 079 806 B1

**Fig 1**

**Fig 2**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 558522 A
- WO 9209528 A
- US 5306475 A
- WO 2007000433 A
- US 4604269 A
- WO 9714650 A

- US 4767605 A
- US 4552767 A
- JP 2002114543 A
- DE 3716566
- DE 3826971
- JP 2010227865 A
- EP 0558528 A

**Littérature non-brevet citée dans la description**

- Method for producing reactive Coolside sorbent - Production of reactive sorbent for cool-size process - by hydrating quicklime with water containing sodium chloride aqueous solution. *Research Disclosure,* 1988, vol. 295 (29564), ISSN 03744353
- **OATES, J.A.H.** Lime and limestone. Wiley-VCH, 1998, vol. 455, 219-221

- **RAKES et al.** Performance of Sorbents with and without additives, injected into a small innovative furnace. *1st Joint Symposium on Dry SO2 and simultaneous SO2/NOx Control Technologies, San Diego, California,* 13 Novembre 1984